# EUROPÄISCHE PATENTSCHRIFT

(11) **EP 2 268 125 B1**
(45) Veröffentlichungstag und Bekanntmachung des Hinweises auf die Patenterteilung: **28.06.2017**
(21) Anmeldenummer: 08873845.5
(22) Anmeldetag: 17.12.2008
(51) Int. Cl.: A01G 7/02, A01G 7/04, A01G 9/16, A01G 1/12

(54) **VORRICHTUNG UND VERFAHREN ZUR WACHSTUMSBESCHLEUNIGUNG UND REGENERATION VON RASENFLÄCHEN**
DEVICE AND METHOD FOR ACCELERATING THE GROWTH OF AND FOR REGENERATING LAWNS
DISPOSITIF ET PROCÉDÉ PERMETTANT D'ACCÉLÉRER LA CROISSANCE ET DE RÉGÉNÉRER DES SURFACES DE PELOUSE

(30) Priorität: 11.04.2008 DE 102008018459
(43) Veröffentlichungstag der Anmeldung: 05.01.2011
(73) Patentinhaber: Linde AG, 80331 München (DE)
(72) Erfinder: BERGHOFF, Rudolf, Erwin, 85716 Unterschleissheim (DE); KRABBENDAM, Peter, NL-2046 AA Haarlem (NL)
(74) Vertreter: Gellner, Bernd
(86) Internationale Anmeldenummer: PCT/EP2008/010780
(87) Internationale Veröffentlichungsnummer: WO 2009/124577

(56) Entgegenhaltungen:
- EP-A- 0 561 193
- EP-A- 1 844 647
- WO-A-95/09681
- WO-A-2008/115065
- FR-A- 2 555 219
- GB-A- 2 350 997

## Beschreibung

Die Erfindung betrifft eine Vorrichtung und ein Verfahren zur Wachstumsbeschleunigung und Regeneration von Rasenflächen.

Aus der WO 95/09681 A geht ein System zum Schutz von Rasenflächen oder Spielfeldern hervor. Diese Vorrichtung ist eine aus mehreren Segmenten zusammengesetzte transparente Abdeckung. Sie dient zur Abdeckung der gesamten Rasenfläche. Die Segmente sind derart ausgebildet, dass sie am Rand der Rasenfläche ineinander geschachtelt abgestellt werden können. Wird das innerste Segment herausgezogen, so werden die weiteren Segmente mitgenommen. Der gesamte Rasen wird durch gegenläufige Reihen aus mehreren dieser Segmente abgedeckt. An der Unterseite der Segmente sind Räder vorgesehen. Das innerste Segment ist mit einer Antriebseinrichtung versehen. Als Antrieb wird sowohl ein Elektromotor als auch eine elektrische Winde vorgeschlagen. Des Weiteren können die Segmente Beleuchtungseinrichtungen und eine Heizeinrichtung aufweisen.

In der FR 2 555 219 A ist eine mobile Struktur zum Abdecken einer Rasenfläche beschrieben. Die Struktur umfasst mehrere ineinanderschiebbare zeltartige Segmente, wobei jeweils ein Element im Nächsten nahezu vollständig aufnehmbar ist. Am unteren Ende der Segmente sind Rollen vorgesehen. Des Weiteren sind Motoren vorgesehen, die ein im Bereich der Rollen angeordnetes Zahnrad antreiben, um die mobile Struktur in Längsrichtung entlang einer Zahnstange auseinander zufahren. Die Vorrichtung ist an der einen Seite einer Rasenfläche anordbar. Über den Antrieb werden die Segmente nacheinander auseinander gezogen, bis die Vorrichtung die Rasenfläche abdeckt. In einer weiteren Ausführungsform ist der Motor im Boden eingelassen und treibt über ein Zahnrad eine an der mobilen Struktur angeordnete Zahnstange an.

Aus der WO 2008/115065 A1 geht ein Tunnelsystem hervor, um Rasenflächen zu schützen. Das Tunnelsystem weist einen halbkreisförmigen Rahmen auf. Der Rahmen weist ein erstes Basiselement auf. Aus dem Basiselement ist eine Vielzahl von weiteren halbkreisförmigen Streben ausziehbar, um ausgehend vom Basiselement einen nahezu beliebig langen Tunnel auszubilden. Die Wandungen des Tunnelsystems sind transparent ausgebildet. Auf der Unterseite des Tunnelsystems sind Rollen angeordnet, die um 360° drehbar sind. An sich in Längsrichtung erstreckenden Versteifungsstreben können Lichteinrichtungen vorgesehen sein. Die Vorrichtung weist eine Steuereinrichtung auf, um Parameter wie Licht, Temperatur und Strom zu steuern.

Das Dokument GB-A-2350997 beschreibt eine relativ kompakte kleine Vorrichtung zur Wachstumsbeschleunigung von Rasen, wobei die Vorrichtung einen Grundrahmen aufweist, an dessen Eckpunkten unterseitig jeweils ein Rad zum Bewegen der gesamten Vorrichtung 1 angeordnet ist.

Aus der EP 0 561 193 A2 geht ein Verfahren und eine Vorrichtung zur Wachstumsförderung von Pflanzen bzw. Gras hervor. Die Vorrichtung weist eine Abdeckung, die das Gras nahezu vollständig abdeckt, Lichtquellen und zwei Lüfter zum Einbringen von Kohlendioxid auf. Unter dieser geschlossenen Abdeckung wird das Gras innerhalb von 24 Stunden mittels der künstlichen Lichtquellen etwa 8 bis 12 Stunden zu belichten. Die Atmosphäre der das Gras ausgesetzt ist wird dabei durch die zwei Lüfter ständig oder intervallweise bewegt und/oder ständig oder von Zeit zu Zeit ausgetauscht. Die Kohlendioxidmenge die vom Gras aufgenommen wird soll kontinuierlich oder in Zeitabschnitten der Atmosphäre des Raumes durch eine Einrichtung zum Einbringen von Kohlendioxid zugeführt werden. Durch dieses Verfahren und diese Vorrichtung soll es möglich sein Gras zu jeder Jahreszeit entsprechend der natürlichren Vorraussetzungen wachsen zu lassen.

In der EP 1 269 815 A ist eine Vorrichtung zur Begasung von Rasenflächen beschrieben. Dabei wird durch einen sich über eine Rasenfläche erstreckenden Gaskanal der Rasenfläche ein Gasstrom zugeführt. Der Gaskanal ist an einem offenen Ende an ein Druckaggregat angeschlossen und am anderen Ende geschlossen. Dieser weist an einem der Rasenfläche zugewandten Bereich Austrittsöffnungen auf. In einer Weiterbildung der Vorrichtung sind Sensoren vorgesehen, die eine oder mehrere Messgrößen, wie Umgebungstemperatur, Umgebungsluftfeuchte, Rasentemperatur, Rasenfeuchte, Gaseintrittstemperatur, Gasaustrittstemperatur, Eintrittsgasfeuchte, Austrittsgasfeuchte, Kohlendioxidanteil sowie Düngeranteil erfassen und zu einem Regel- und Steuergerät übertragen, mit dem das Druckaggregat und/oder die Zuführung von Wasserdampf und/oder Kohlendioxid und/oder Dünger und/oder eine Heizvorrichtung eingestellt werden können. Die Vorrichtung kann auch als mobile Vorrichtung mit einem Fahrgestell ausgebildet sein. Bei einer derartigen mobilen Vorrichtung ist ein Fahrgestell mit einem Antrieb vorgesehen. Der Antrieb erfolgt mittels einer Antriebskette, die in einem Antriebskanal verläuft. Der Antriebskanal befindet sich unter dem Niveau der Rasenfläche.

Die DE 10 2006 017 813 A1 offenbart ein Verfahren zur Wachstumsbeschleunigung und Regeneration von Rasenflächen, wobei die Rasenfläche zumindest teilbereichsweise oberseitig durch einen nach unten offenen allseitig umschlossenen Raum umschlossen wird. In den Raum wird CO₂ eingeleitet wird und die vom Raum überdeckte Rasenfläche mit einer Beleuchtungseinrichtung mit Licht beaufschlagt. Auf die DE 10 2006 017 813 A1 wird hiermit vollinhaltlich Bezug genommen.

Nachteilig bei den aus dem Stand der Technik bekannten Vorrichtung ist, dass lediglich eine begrenzte Fläche abgedeckt und eine Vergrößerung der Vorrichtung überproportional teuer ist. Zudem sind derartige Wachstumsvorrichtungen aufgrund ihrer Höhe und ihres leichten Aufbaus bei Unwettern sehr anfällig. Aufgabe der Erfindung ist es, eine Vorrichtung und ein Verfahren bereitzustellen mit denen große Rasenflächen einfach und kostengünstig im Wachstum beschleunigt werden können.

Die Aufgabe wird mit einer Vorrichtung mit den Merkmalen des Anspruchs 1 und durch ein Verfahren mit den Merkmalen des Anspruchs 13 gelöst.

Vorteilhafte Weiterbildungen sind in den hiervon abhängigen Unteransprüchen gekennzeichnet.

Die erfindungsgemäße Vorrichtung ist zur Wachstumsbeschleunigung und Regeneration von Rasenflächen ausgebildet. Sie umfasst ein nach unten offenes, auf einer Rasenfläche aufstellbares Gehäuse, das einen Raum über der Rasenfläche begrenzt, wobei das Gehäuse entweder transparent ausgebildet ist und/oder eine Beleuchtungseinrichtung zum Beleuchten der Rasenfläche aufweist. Das Gehäuse ist mit einer Verfahreinrichtung zum automatischen Bewegen des Gehäuses auf der Rasenfläche ausgebildet.

Durch das automatische Verfahren der erfindungsgemäßen Vorrichtung sind weniger manuelle Tätigkeiten beim Benutzen einer derartigen Vorrichtung notwendig. Auf diese Weise werden die Kosten für Personal reduziert und die Vorrichtung kann selbstständig eine komplette Rasenfläche behandeln.

Zudem werden durch das automatische Verfahren die Rasenflächen exakt nach voreingestellten Parametern behandelt, wodurch eine effektivere und gleichmäßigere Behandlung der Rasenfläche erfolgt.

Eine Beschädigung der Vorrichtung durch Unwetter wird durch das zusammen- bzw. wegfahren vermieden. Auch die Gefahr eines Personenschadens durch herumfliegende bzw. umfallende Vorrichtungen wird reduziert.

Die Erfindung wird anhand einer Zeichnung beispielhaft erläutert. Es zeigen dabei schematisch:
- Figur 1:: eine erfindungsgemäße Vorrichtung bzw. deren Gehäuse in einer dreidimensionalen Ansicht ohne Komponenten,
- Figur 2:: die erfindungsgemäße Vorrichtung gemäß Figur 1 mit Komponenten,
- Figur 3:: ein weiteres Ausführungsbeispiel der erfindungsgemäßen Vorrichtung in einer dreidimensionalen Ansicht,
- Figur 4:: ein weiteres Ausführungsbeispiel der erfindungsgemäßen Vorrichtung in einer dreidimensionalen Ansicht,
- Figur 5:: ein weiteres Ausführungsbeispiel der erfindungsgemäßen Vorrichtung in einer dreidimensionalen Ansicht,
- Figur 6:: ein weiteres Ausführungsbeispiel der erfindungsgemäßen Vorrichtung in einer dreidimensionalen Ansicht,
- Figur 7:: ein weiteres Ausführungsbeispiel der erfindungsgemäßen Vorrichtung in einer dreidimensionalen Ansicht,

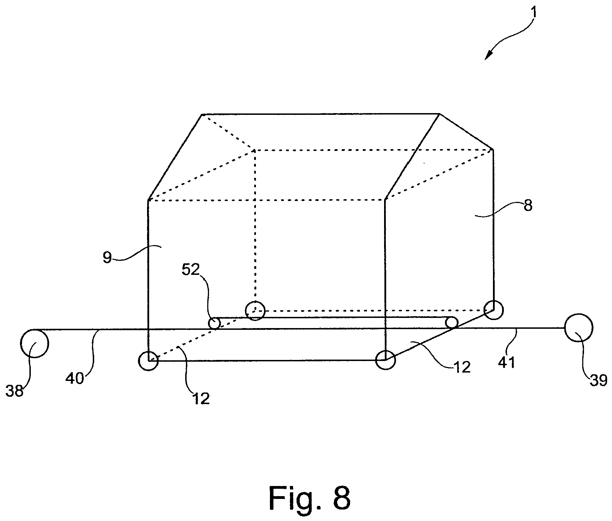

- Figur 8:: ein weiteres Ausführungsbeispiel der erfindungsgemäßen Vorrichtung in einer dreidimensionalen Ansicht,
- Figur 9:: ein weiteres Ausführungsbeispiel der erfindungsgemäßen Vorrichtung in einer dreidimensionalen ausgefahrenen Ansicht,
- Figur 10:: ein weiteres Ausführungsbeispiel der erfindungsgemäßen Vorrichtung in einer dreidimensionalen zusammengefahrenen Ansicht, und
- Figur 11:: ein weiteres Ausführungsbeispiel der erfindungsgemäßen Vorrichtung in einer dreidimensionalen Ansicht,

Die erfindungsgemäßen Vorrichtungen 1 sind vorgesehen, um das Wachstum eines Rasens 2 zu beschleunigen, wobei sie ein nach unten offenes Gehäuse zum Abdecken eines Bereiches des Rasens 4 aufweisen, das verfahrbar ausgebildet ist.

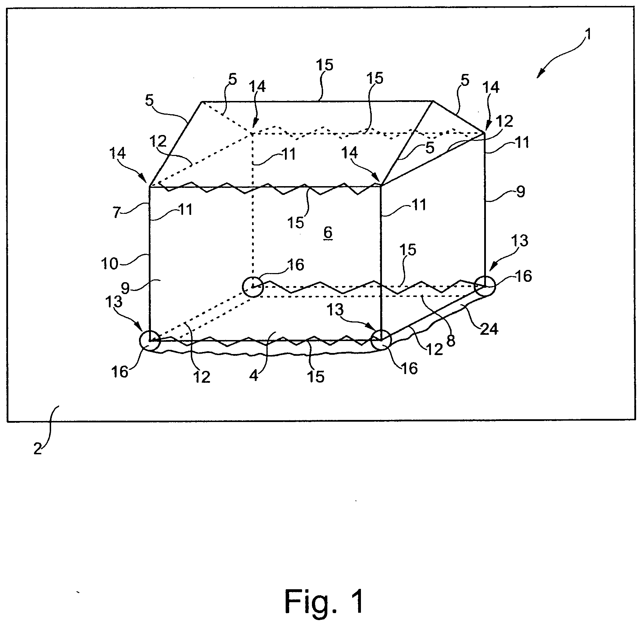

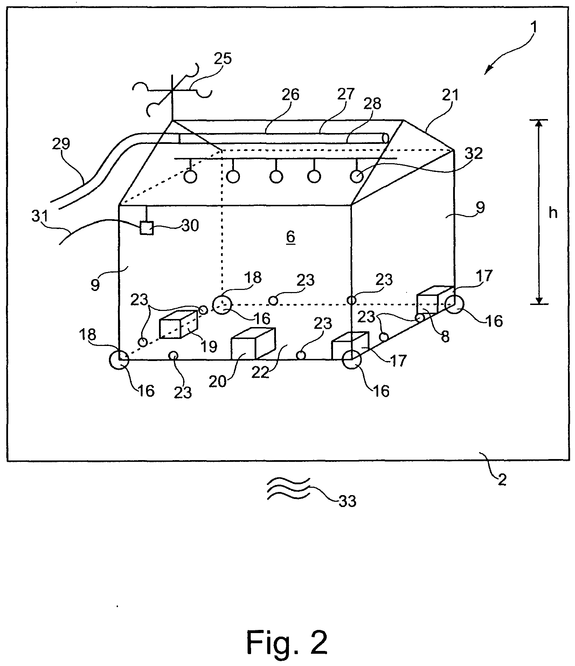

In Figur 1 ist ein erstes Ausführungsbeispiel der erfindungsgemäßen Vorrichtung 1 dargestellt, wobei die Figur 1 eine Rahmenstruktur 7 des Gehäuses ohne Komponenten und Figur 2 die Rahmenstruktur 7 des Gehäuses mit Komponenten zeigt. Das Gehäuse begrenzt einen Raum 6 über einer Rasenfläche 4. Die Rahmenstruktur 7 weist Streben entlang der Kanten des quaderförmigen Gehäuses auf. Die beiden sich in Längsrichtung des Gehäuses gegenüberliegenden Stirnwandungen bilden eine Vorderwandung 8 und eine Rückwandung 9 aus. Die Vorderwandung 8 und die Rückwandung 9 weisen einen rechteckförmigen Rahmen 10 aus jeweils zwei vertikal und zwei horizontal angeordneten Streben 11, 12 auf, die Teil der Rahmenstruktur 7 des Gehäuses 3 sind.

Die jeweiligen gegenüberliegenden oberen und unteren Ecken 13, 14 der rechteckförmigen Rahmen der Vorder- und der Rückwandung sind über Längsstreben 15 in Längsrichtung miteinander verbunden. Die Längsstreben 15 und die vertikalen Streben begrenzen Seitenwandungen 22.

Das Gehäuse 3 bzw. dessen Rahmenstruktur 7 ist zusätzlich zu der Vorder- und der Rückwandung 8, 9 mit einem Dach 21 und Seitenwandungen 22 versehen.

Das Dach 21 ist als Spitzdach ausgebildet. Am First des Daches ist eine sich in Längsrichtung erstreckende Längsstrebe 15 angeordnet, die mit den oberen Ecken 13 über vier Gibelstreben 5 verbunden ist.

Vorzugsweise sind die Wandungen aus Folien ausgebildet. Das Gerüst 7 und die Folien bilden ein Zelt.

Die Folien können transparent sein. Dieses transparente Folienmaterial bewirkt ähnlich wie Glas in herkömmlichen Treibhäusern einen Treibhauseffekt im inneren der Vorrichtung.

Die Längsstreben 15 sind in der Länge verstellbar ausgebildet. Sie verbinden die Vorder- und die Rückwandung 8, 9 in Längsrichtung derart miteinander, dass der Abstand zwischen der Vorder- und der Rückwandung 8, 9 z.B. zwischen 0,5 m und 7 m variiert werden kann.

Die Längsstreben sind ziharmonikaartig ausgebildet.

Es kann auch vorgesehen sein die Verbindungsstreben 15 in Form von teleskopartig ausfahrbaren Streben (pneumatisch) auszubilden.

Diese variablen Längsstreben 15 sind jeweils mit einem Sperrglied (nicht dargestellt) versehen, um diese zu blockieren bzw. sie im nicht blockierten Zustand aus- und einzufahren. Die Sperrglieder sind mit einer Steuereinrichtung verbunden. Im ausgefahrenen und im zusammengefahrenen Zustand werden die Verbindungsstreben über die von einer Steuereinrichtung 20 angesteuerten Sperrglieder blockiert. Hierdurch bildet das Gehäuse 3 eine steife bzw. starre Einheit aus, wodurch es eine hohe Standfestigkeit besitzt.

Die Rahmenstruktur 7 bzw. die Streben 11, 12, 15 des Gehäuses 3 sind aus einem leichten steifen Material, wie z.B. glasfaserverstärktem Kunststoff oder Aluminiumhohlprofilen, ausgebildet.

Unterseitig an den unteren Ecken 13 der Vorder- und der Rückwandung 8, 9 sind Räder 16 angeordnet.

Beide Räder 16 der Vorderwandung 8 sind jeweils mit einem Motor 17 verbunden, um sie anzutreiben. Die Motoren 17 stellen zusammen mit den Rädern 16 eine Verfahreinrichtung dar.

Beide Räder 16 der Rückwandung sind über Lager 18 um eine vertikale Achse drehbar ausgebildet. An den Rädern 16 ist eine Bremse 19 vorgesehen, um ein unerwünschtes Abrollen der Räder 16 der Rückwandung zu verhindern.

Die Motoren 17 und die Bremse 19 sind mit der Steuereinrichtung 20 verbunden. Die angetriebenen Räder 16 können zum Drehen der Vorrichtung 1 mit unterschiedlicher Geschwindigkeit angesteuert werden.

Auf diese Weise ist die Vorrichtung 1 sehr wendig und kann auf kleinstem Raum exakt verfahren werden.

Zudem ist die Vorrichtung 1 zusammenfahrbar, wenn die Räder 16 der Rückwandung 9 über die Bremse 19 blockiert sind und die Vorderwandung 8 über die Motoren 17 in Richtung der Rückwandung 9 verfahren wird.

An den unteren horizontalen Streben 12 der Vorder- und der Rückwandung 8, 9 sowie an den unteren Verbindungsstreben 15 sind umlaufend oder umlaufend verteilt Sensoren 23 angeordnet, um Hindernisse und/oder Markierungen zu erkennen. Es können z.B. zwei Sensoren 23 auf jeder Seite der Vorrichtung 1 vorgesehen sein.

Als Markierung können z.B. ein auf der Rasenfläche 2 angeordneter Draht oder Lichtsignale (Laser) vorgesehen sein. Dadurch kann die zu behandelnde Fläche begrenzt werden und die Steuerung der Vorrichtung 1 wird vereinfacht.

Anstelle dieser Sensoren 23 oder in Ergänzung zu diesen Sensoren können auch Näherungssensoren vorgesehen sein, um einen Zusammenstoß zweier Vorrichtungen 1, die getrennt voneinander auf einer Rasenfläche 2 verfahren werden oder einen Zusammenstoß mit einem Hindernis zu verhindern.

Die Wandungen 8, 9, 21, 22 weisen unterseitig Manschetten 24 auf, um den von den von der Vorrichtung 1 begrenzten Raum 6 möglichst gasdicht gegenüber der Umgebung bzw. der Rasenfläche 2 abzuschließen.

Des weiteren ist im oberen Bereich der Vorrichtung 1 bzw. auf dem Dach 21 eine Windmesseinrichtung 25 angeordnet, um die Windstärke in Vorrichtungsnähe zu messen.

Die Steuereinrichtung 20 wertet, die von der Windmesseinrichtung 25 aufgenommenen Daten aus.

Die Steuereinrichtung 20 ist derart ausgebildet, dass die Vorrichtung 1 über die Motoren 17 mit einer bestimmten Geschwindigkeit über die Rasenfläche 2 verfahren wird oder für eine bestimmte Zeit dort verweilt, um die optimale Behandlungsdauer pro Rasenfläche zu gewährleisten.

Bei Sturm oder böigem Wind kann die Steuereinrichtung 20 die Vorrichtung 1 auf ein kompakteres bzw. kleineres Format zusammenfahren, um dem Wind weniger Angriffsfläche zu bieten. In dem die Rollen der Rückwandung blockiert werden und die Vorderwandung 8 in Richtung Rückwandung 9 verfahren wird die Gesamtlänge der Vorrichtung 1 verkürzt.

Es kann auch vorgesehen sein dass die Vorrichtung 1 in einen Unterstand verfahren wird, wo sie vor Beschädigungen durch den Wind geschützt ist. Der Unterstand ist derart ausgebildet, dass mehrere solche Vorrichtungen 1 zumindest im zusammengefahrenen Zustand darin angeordnet werden können.

In einem oberen Bereich bzw. unterhalb des Dachs 21 ist eine Ausströmvorrichtung 26 für Gas vorhanden, wobei die Ausströmvorrichtung 26 beispielsweise ein rohrartiges Gebilde 27 ist, welches sich über eine Teillänge oder die gesamte Länge des Raumes 6 erstreckt. Das Rohr bzw. rohrartige Gebilde 27 besitzt Ausströmöffnungen 28, aus denen ein CO₂-Gas ausströmen kann.

Das CO₂-Gas stammt aus einem Gasspeicher (nicht dargestellt), der mit einer entsprechenden Zuführleitung 29 mit dem rohrartigen Gebilde 27 verbunden ist.

Um zudem den CO₂-Gehalt in dem umschlossenen Raum 6 bzw. dem Zelt zu überwachen, ist ein CO₂-Messgerät oder ein CO₂-Sensor 30 über eine Leitung 31 vorzugsweise mit dem Gasspeicher verbunden, wobei die Steuereinrichtung 20 den Gasgehalt steuert/regelt.

In einer Höhe h vom Boden bzw. Rasen gemessen ist im Gehäuse 3 bzw. in dem Zelt eine Beleuchtungseinrichtung 32 vorhanden, welche beispielsweise aus Leuchtstoffrören, Glühlampen oder Gasentladungslampen besteht. Bevorzugt werden Photosyntheselampen verwendet, wie z.B. die von General Electric Comp. hergestellten und unter der Handelsbezeichnung Lucalox PSL vertriebenen Lampen. Als Beleuchtungseinrichtung 32 können auch Leuchtdioden (LED) vorgesehen sein, die Licht im für die Photosynthese geeigneten Wellenbereich emittieren.

Ist im Boden unterhalb des Rasens 2 eine Rasenheizung 33 vorhanden, dann kommt es innerhalb des umschlossenen Raumes 6 zu einer Zirkulation des aus dem rohrartigen Gebilde 27 ausströmenden und nach unten strömenden bzw. fallenden CO₂, wobei durch Konvektion bei einem mittigen Eintrag des CO₂ vom Dach 21 her das CO₂ in den Randbereichen nach oben strömt.

Es wurde festgestellt, dass auch die Wärmeentwicklung der Beleuchtungseinrichtung 32 für die Ausbildung einer derartigen Konvektion völlig ausreichend ist, so dass auch in Stadien, in denen eine Rasenheizung nicht vorhanden ist, eine ausreichende Konvektion sichergestellt ist.

Beim oben erläuterten Ausführungsbeispiel wird zum Zuführen des CO₂-Gases ein Rohr 27 verwendet. Es hat sich jedoch auch gezeigt, dass es im Rahmen der Erfindung möglich ist, anstelle eines solchen Rohres eine einzelne, punktförmige Düse zu verwenden, da durch die im umschlossenen Raum bestehende Konvektion für eine gleichmäßige Verteilung des CO₂-Gases gesorgt ist.

Die Beleuchtungseinrichtung 32 wird in einer Höhe h von 1,40 m bis 3 m, bevorzugt 2,20 m bis 2,50 m, vorgesehen, wobei die CO₂-Zuleitung etwa 20 cm bis 80 cm über der Beleuchtungseinreichtung vorgesehen wird.

Die weiteren Ausführungsbeispiele der erfindungsgemäßen Vorrichtung weisen soweit nichts anderes beschrieben ist die Merkmale des ersten Ausführungsbeispiels auf.

Es kann auch vorgesehen sein, auf eine Ausströmvorrichtung 26 zu verzichten und die Beleuchtungseinrichtung 32 in einer Höhe h von 10 cm über der Rasenfläche 4 bis etwa 0,5m bis 1 m anzuordnen. Dadurch wird die gesamte Vorrichtung 1 sehr niedrig ausgebildet und bietet nahezu keine Angriffsfläche für Wind.

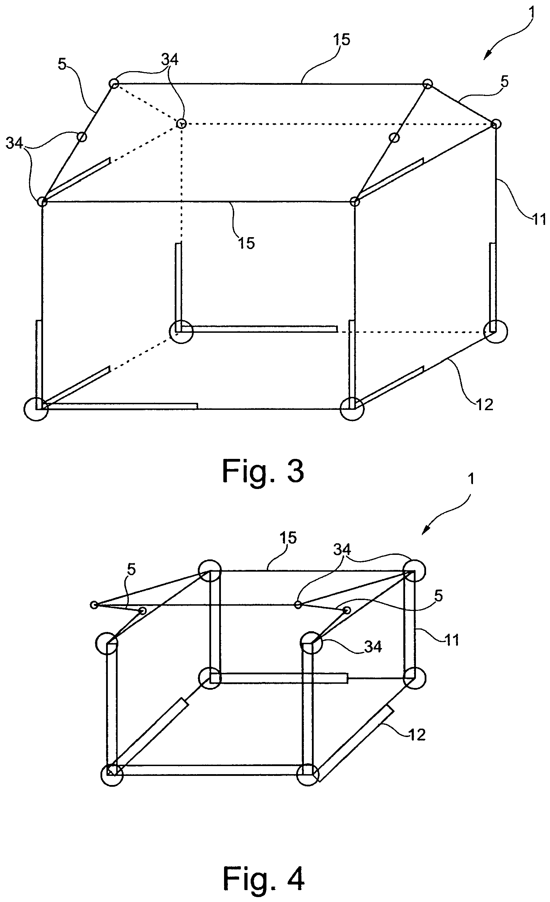

Bei einem zweiten Ausführungsbeispiel der Vorrichtung (Figur 3) sind die horizontalen und die vertikalen Streben der Vorder- und der Rückwandung in der Länge variabel ausgebildet. Auf diese Weise ist die Vorrichtung nicht nur in der Länge sondern auch in der Breite und in der Höhe zusammenfahrbar ausgebildet, um eine geringere Angriffsfläche gegenüber Wind vorzusehen.

Das Dach 21 verfügt bei einer derartigen Ausführungsform über entsprechende Gelenke 34 an den Gibelstreben 5 und an den oberen Ecken der Vorder- und der Rückwandung 8, 9, um das Dach 21 faltbar auszubilden (Figur 4).

In einem weiteren Ausführungsbeispiel sind zum Aus- und Einfahren der horizontalen und der vertikalen Streben 11, 12 und der Längsstreben 15 Stellmotoren (nicht dargestellt) vorgesehen, die von der Steuereinrichtung 20 angesteuert werden.

Bei einer derartigen Ausbildung der Vorrichtung dienen die Motoren 17 lediglich zum Lenken bzw. Drehen und Verfahren der Vorrichtung 1.

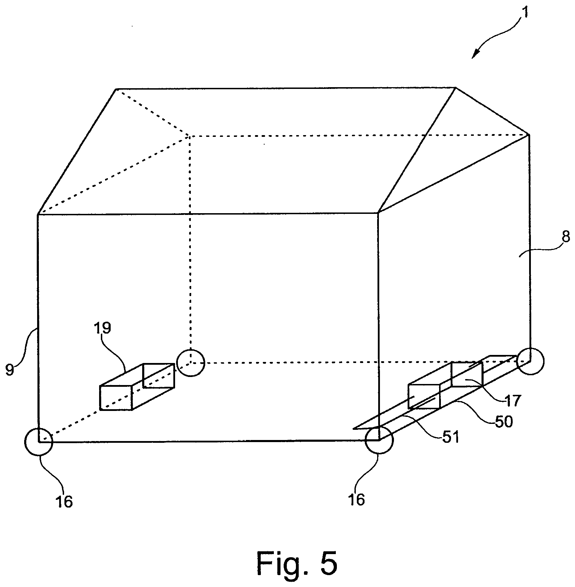

Bei einem weiteren Ausführungsbeispiel der erfindungsgemäßen Vorrichtung (Figur 5) werden die Räder 16 der Vorderwandung 8 von einem einzigen Motor 17 angetrieben, der über eine Antriebswelle 50 mit beiden Rädern verbunden ist. Zudem sind die Räder der Vorderwandung mit einem Stellantrieb 51 verbunden, um die Vorrichtung lenken zu können.

Die Räder der Rückwandung 16 sind dann mit einer Bremse 19 verbunden, um die Rückwandung 9 blockieren zu können.

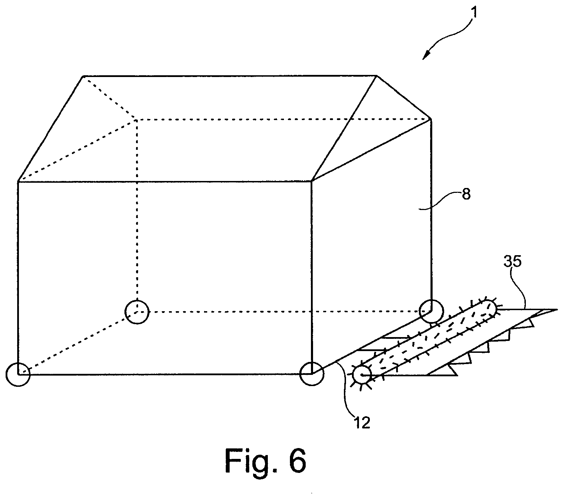

In einem weiteren Ausführungsbeispiel (Figur 6) ist in Längsrichtung im Bereich vor der Vorderwandung 8 eine Rasenmäh- und/oder Vertikutiereinrichtung 35 angeordnet.

Die Rasenmäh- und/oder Vertikutiereinrichtung 35 wird ebenfalls von der Steuereinrichtung 20 angesteuert und arbeitet insbesondere beim Verfahren der Vorrichtung 1, um während des Verfahrens die Rasenfläche 4 durch Schneiden und/oder Vertikutieren zusätzlich zu pflegen.

Mehrere oben beschriebene Vorrichtungen 1 können zu einem Zug gekoppelt werden. Jede Vorrichtung bildet hierbei ein Segment des Zuges. Bei einem Solchen Zug wird bei Verwendung relativ kleiner Segmente eine große Fläche abgedeckt und behandelt. Hiermit lassen sich auch konturierte Landschaften, wie Golfplätze behandeln, da innerhalb eines Zuges eine Angleichung an die variable Kontur durch die unterschiedlichen Neigungen der einzelnen Segmente erfolgt. Die einzelnen Segmente können derart gelenkig miteinander verbunden sein, dass sie einen gemeinsamen Raum über der Rasenfläche begrenzen.

Dies kann z.B. durch Verzicht auf die entsprechenden Vorder- bzw. Rückwandungen realisiert werden. Die einzelnen Segmente bzw. deren Seitenwandungen und Dächer sind über Schläuche gasdicht miteinander verbunden.

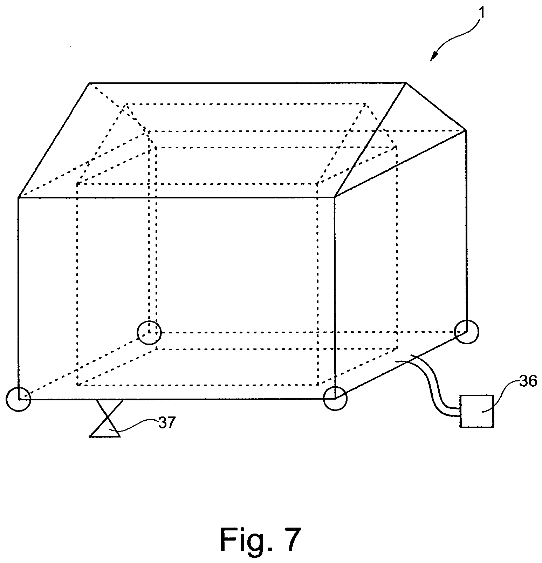

In einer weiteren Ausführungsform der erfindungsgemäßen Vorrichtung 1 (Figur 7) ist diese zeltförmig mit luftmatratzenartig ausgebildeten aufblasbaren Wandungen versehen. Diese können z.B. über eine Pumpe 36 aufgeblasen werden. Bei zu starken Wind kann die Luft einfach aus den Wandungen gelassen werden. Auf diese Weise legt sich die Vorrichtung flach auf den Boden und bildet keine Angriffsfläche für den Wind mehr.

Die einzelnen Wandungen können beispielsweise einzelne Kammern aufweisen, die kommunizierend miteinander verbunden sind, um die Stabilität der Vorrichtung zu erhöhen und die über eine mit der Steuereinrichtung 20 verbundene Pumpe 36 aufblasbar sind.

Das Ablassen der Luft aus den Wandungen erfolgt über ein von der Steuereinrichtung 20 ansteuerbares Ventil 37.

In einer weiteren Ausführungsform der erfindungsgemäßen Vorrichtung 1 kann auch vorgesehen sein, dass die Wandungen der Vorrichtung aus Glas oder Kunststoff wie z.B. Polymethylmethacrylat (PMMA), Acrylglas, Plexiglas®, Limacryl®, Piacryl oder O-Glas ausgebildet sind. Bei der Verwendung von Lampen ist es nicht zwingend notwendig, dass die Wandungen transparent ausgebildet sind.

Die Steuereinrichtung 20 kann mit einem Satelliten-Navigationssystem und/oder einem terrestrischen Navigationssystem verbunden sein.

In einer weiteren Ausführungsform der erfindungsgemäßen Vorrichtung 1 sind anstelle der Motoren zwei Seilwinden 38, 39 als Verfahreinrichtung der Vorrichtung 1 vorgesehen. Die erste Seilwinde 38 ist über ein Seil 40 mit der unteren Querstrebe 12 der Rückwandung 9 verbunden. Das zweite Seil 41 ist an der unteren Querstrebe 12 der Vorderwandung 8 angeordnet und wird über eine an der unteren Querstrebe 12 der Rückwandung 9 angeordnete Rolle 52 umgelenkt, so dass es am vorderen Ende der Vorrichtung 1 aus der Vorrichtung austritt und mit der zweiten Seilwinde 39 verbunden ist. Durch Betätigen der Seilwinden 38, 39 kann die Vorrichtung auf einer Rasenfläche verfahren werden. Außerdem kann die Vorrichtung zusammengezogen werden und/oder ausgefahren, wenn die Verbindungsstreben nicht blockiert sind. Über die Seilwinden kann die Vorrichtung in einen Unterstand verfahren werden, um sie vor Beschädigungen durch Wind zu schützen.

Zum Verfahren der Vorrichtung 1 genügt lediglich eine Seilwinde, wenn diese z.B. auf einer Seite der Rasenfläche angeordnet ist und über ein schleifenförmiges Endlos-Seil verfügt, das auf der anderen Seite der Rasenfläche von einer Rolle umgelenkt wird. Das Seil ist mit der Vorrichtung 1 verbunden.

Im folgenden wird das erfindungsgemäße Verfahren beschrieben.

Eine oder mehrere erfindungsgemäße Vorrichtungen werden auf einer zu behandelnden Rasenfläche positioniert.

Die Steuereinrichtung steuert nach einer voreingestellten Behandlungszeit die Motoren derart an, dass die Vorrichtung automatisch, um z.B. eine Vorrichtungslänge verfährt und einen nächsten Abschnitt des Rasens behandelt.

Die Koordinaten nach denen die Vorrichtung verfahren wird können entweder von einer Steuerroutine, die das Verfahren der Räder erfasst oder über von Sensoren detektierte Signale, wie z.B. von einem in der Rasenfläche angeordneten Draht oder einem Lichtsignal oder auch von einem globalen Navigationssystem bereitgestellt werden.

Die Behandlung der Rasenfläche sieht eine Begasung mit CO₂ und/oder Behandlung mit Licht vor.

Beim Aufkommen eines Sturmes bzw. eines Unwetters, das stark genug ist, um die Betriebsfähigkeit der Vorrichtung zu beeinträchtigen oder diese zu beschädigen, wird die Vorrichtung auf kompaktere Abmessungen zusammengefahren.

Die Steuereinrichtung erhält die Anweisungen, dass sie die Vorrichtung zusammenfahren soll beispielsweise durch die Auswertung der von der Windmesseinrichtung bereitgestellten Daten. Die Windmesseinrichtung liefert die aktuellen Windstärken unmittelbar in Vorrichtungsnähe und ist deshalb besonders gut geeignet, um Parameter für eine sichere Betriebsfähigkeit der Vorrichtung zu liefern. Die Auswertung berücksichtigt auch die Böigkeit des Windes.

Die Informationen für die Steuereinrichtung können auch von einem Wetterdienst bereitgestellt werden.

Außerdem ist es auch möglich, die Vorrichtung manuell z.B. über eine Fernsteuerung entsprechend den aktuellen Wetterverhältnissen anzusteuern.

Das Zusammen kann entsprechend der oben beschriebenen Ausführungsbeispiele erfolgen.

Zum Beispiel indem die Räder der Vorderwandung über die Bremse blockiert werden und die angetriebenen Räder der Rückwandung die Rückwandung in Richtung der Vorderwandung verfahren. Die Verbindungsstreben fahren dann zusammen und die Vorrichtung weist eine geringere Gesamtlänge auf.

Auf diese Weise besitzt die Vorrichtung eine geringere Angriffsfläche gegenüber Wind und kann so in den meisten Fällen auf der Rasenfläche verbleiben.

Zusätzlich kann die Vorrichtung auch in der Breite und/oder in der Höhe zusammengefahren werden was die Angriffsfläche weiter reduziert.

Die Vorrichtung kann auch automatisch in einen entsprechenden Unterstand verfahren werden, wo sie vor Unwetter sicher ist.

Als zusätzlicher Behandlungsschritt kann auch vorgesehen sein, dass die Vorrichtung den Rasen während des Verfahrens über ein Rasenmäh- und /oder Vertikutiert mäht und vertikutiert

In einem weiteren Ausführungsbeispiel wenn eine erste und eine zweite Seilwinde auf gegenüberliegenden Seiten z.B. eines Fußballfeldes angeordnet sind, kann die Vorrichtung ebenfalls zusammengefahren werden. Hierbei wird das Seil der zweiten Seilwinde blockiert und am Seil der ersten Seilwinde gezogen. Das Seil der ersten Seilwinde ist an der unteren Querstrebe der Vorderwandung befestigt und wir über die frei drehbare Rolle an der unteren Querstrebe der Rückwandung umgelenkt. Somit bewegt sich die Vorderwandung in Richtung der Rückwandung bis die Vorrichtung vollständig zusammengefahren ist.

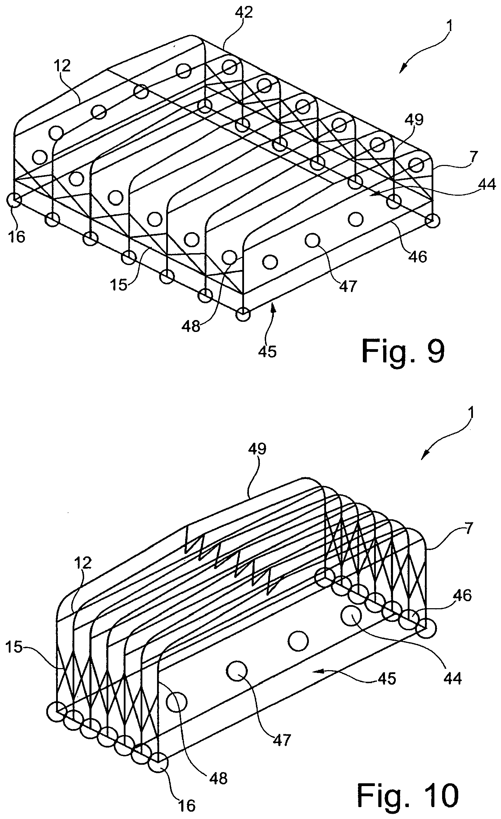

In einem weiteren Ausführungsbeispiel der vorliegenden Erfindung (Fig. 9, 10) umfasst die Vorrichtung 1 ein Gehäuse 3 mit einer Rahmenstruktur 7, bei welcher mehrere Gehäuseprofilrahmen 48 jeweils mit zieharmonikaartig zusammenschiebbaren bzw. streckbaren Längsstreben 15 verbunden sind. Jeder Gehäuseprofilrahmen weist zwei vertikale Streben 11 sowie eine sich zwischen den beiden oberen Enden der vertikalen Streben erstreckende Dachstrebenstruktur 49. Jede Dachstrebenstruktur 49 weist eine horizontale Strebe 12 und zwei Gibelstreben auf. Die Bereiche zwischen zwei Gehäuseprofilrahmen 48 bilden jeweils einen Gehäuseabschnitt 42 aus.

Jeder der Gehäuseabschnitte 42 weist eine Länge von ca. 5 m und eine Breite von ca. 6 m auf. Zwei bis fünf dieser Gehäuseabschnitte 42 können einen Tunnel ausbilden der eine Fläche von ca. 150 m² abdeckt. Mit z.B. vier dieser Tunnel (ca 600 m²) wird die Rasenfläche eines Stadions (ca. 7000 m²) abschnittsweise regeneriert.

Die einzelnen Gehäuseprofilrahmen 48 dieses Tunnels sind an ihren unteren Enden mit Rädern 16 versehen, um auf dem zu regenerierenden Rasen 2 fahrbar zu sein.

Im eingefalteten Zustand weisen die Gehäuseabschnitte 42 eine Länge von ca. 80 cm auf und können mit einer einfachen Hubmaschine, beispielsweise einem Gabelstapler versetzt werden. Es ist auch möglich das die Vorrichtung einen Motor zum Antreiben der Räder gemäß den oben beschriebenen Ausführungsbeispielen aufweist.

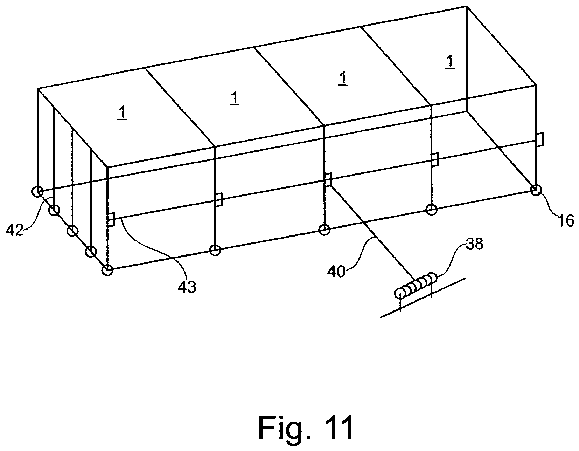

In Fig 11 sind mehrere nebeneinander angeordnete Vorrichtungen des in den Figuren 9 und 10 gezeigten Ausführungsbeispiels schematisch als Quader 1 dargestellt. Die Vorrichtungen 1 sind miteinander verbunden, um sie gemeinsam zu verfahren. Die Verbindung kann z.B. über einen Balken 43 erfolgen. Der Balken 43 ist über ein Seil 40 mit einer Seilwinde 38 verbunden. Durch Betätigen dieser Seilwinde 38 sind die Vorrichtungen über die Rasenfläche 2 verfahrbar.

In einer Höhe h vom Rasen 2 gemessen sind in jedem Gehäuseabschnitt 42 Beleuchtungseinrichtungen 32 in Form von beispielsweise sechs Lampen vorhanden. Die Lampen sind speziell für die Photosynthese entwickelte Assimilationslampen von Philips mit beispielsweise 600W und einem Beleuchtungsgrad von 100 bis 200 µmol/m²s.

Die Lampen sind in einer Höhe h von 1,6 m bis 2,0 m und vorzugsweise 1,8 m angeordnet.

Die Lampen erhöhen die Umgebungstemperatur um ca. 10°C. Dies genügt oftmals, um auch im Winter eine Temperatur von 3°C bis 5°C zu erreichen, die der Rasen zum Wachstum benötigt.

Bei hohen Außentemperaturen kann es zweckmäßig sein, die Lampen räumlich vom begasten Raum zu trennen, da diese die meiste Hitze erzeugen. Zu hohe Temperaturen wären schädlich für das Wachstum des Rasens 2. Deshalb weist die erfindungsgemäße Vorrichtung 1 gemäß einer weiteren Ausführungsform einen Beleuchtungsraum 44, in dem die Beleuchtungseinrichtungen 32 angeordnet sind, und einen Regenerationsraum 45, in dem die Ausströmvorrichtung 26 angeordnet ist, auf. Der Beleuchtungsraum 44 und der Regenerationsraum 35 sind voneinander durch eine zweite Deckenwandung 46 getrennt, die transparent bzw. lichtdurchlässig ausgebildet ist. Die zweite Deckenwandung 46 schließt den Regenerationsraum 45 gasdicht ab und ist z.B. ca. 50 cm über dem Boden angeordnet.

Die Lampen sind in dem Beleuchtungsraum 44 unterhalb des Firstes angeordnet. Die Seitenwandungen 22 sind mit Belüftungsmitteln 47, die als Belüftungsöffnungen 47 ausgebildet sind versehen, um die Wärme der Lampen abzuführen.

Wenn die gesamte Folie als transparente Folie ausgebildet ist, gelangt Sonnenlicht auf den Rasen, so dass die Beleuchtungseinrichtungen 32 bei Tageslicht ausgeschaltet werden kann, wodurch erheblich Energie eingespart wird. Die Folie ist vorzugsweise derart ausgebildet, dass sie von außen lichtdurchlässig ist und von innen Licht reflektiert, indem z.B. die Innenfläche verspiegelt ist und die Außenfläche matt ausgebildet ist.

Durch die räumliche Trennung und/oder die geöffneten Belüftungsöffnungen 47 wird eine zusätzliche Erwärmung des Regenerationsraums 45 verhindert.

Die in Fig. 9, 10 und 11 gezeigte Ausführungsform kann auch ohne Unterteilung des umschlossenen Raums 6 in einen Beleuchtungsraum 44 und einen Regenerationsraum 45 ausgebildet sein.

Die CO₂-Konzentration beträgt vorzugsweise zwischen 800 ppm CO₂ und 2000 ppm CO₂.

Durch die gasdichte Abkapselung mittels eines umschlossenen Raumes oder Zeltes wird durch die Wärmeentwicklung der Leuchtmittel gegebenenfalls auch die Wärmeentwicklung durch eine Rasenheizung eine signifikante Temperaturerhöhung herbeigeführt, welche ausreicht, die den Rasen ausbildenden Graspflanzen ein Wachstum zu ermöglichen.

Durch die Wärmeentwicklung der Leuchtmittel zum Einen und gegebenenfalls einer Rasenheizung zum Anderen wird eine gleichmäßige -Konzentration durch konvektive Verteilung erzielt.

Mit dem Verfahren und der Vorrichtung wird selbst in kalten Wintermonaten und bei hoher Belastung der Rasenfläche in einfacher Weise durch eine höhere Lichtintensität als bei Tageslicht und eine hohe CO₂-Konzentration bei ausreichenden hohen Temperaturen optimale Bedingungen für den Rasen erzielt.

Die Erfinder konnten selbst in den Wintermonaten ein Wachstum von etwa 0,5 mm pro Stunde der den Rasen ausbildenden Graspflanzen beobachten. Die Außentemperaturen betrugen hierbei etwa 5°C bis 6°C. Die im Rasen gemessenen Temperaturen waren deutlich höher. Dies lag zum einem daran, dass eine Bodenheizung verwendet wurde. Jedoch hat auch der Wärmeeintrag durch die Lampen und die wärmerückhaltende Wirkung durch das Zelt und die CO₂-Konzentration zur Temperaturerhöhung im Rasen beigetragen. So wurde eine Temperatur von 21 °C im Rasen erzielt.

Die erfindungsgemäßen Zelte bzw. umbauten Räume haben etwa eine Grundfläche von 10 x 30 m bis 15 x 30 m bzw. von 30 m² bis 400 m². Kleinere Zelte werden verwendet, um lokal sehr beanspruchte Bereiche, wie z.B. den Bereich um das Tor zu pflegen.

Es ist vorgesehen, dass das System bzw. die Vorrichtung oder das Verfahren an einem bestimmten Ort vier bis zwölf Stunden aufgestellt und betrieben wird und dann umgesetzt wird, um an einem nächsten Ort weiterbetrieben zu werden.

Bei dem erfindungsgemäßen Verfahren und bei der erfindungsgemäßen Vorrichtung ist von Vorteil, dass sehr einfach, effektiv und kostengünstig große Rasenflächen behandelt werden können.

### Bezugszeichenliste

- 1: Vorrichtung
- 2: Rasen
- 4: Rasenbereich
- 5: Gibelstreben
- 6: Raum
- 7: Rahmenstruktur
- 8: Vorderwandung
- 9: Rückwandung
- 10: rechtecksförmiger Rahmen
- 11: vertikale Strebe
- 12: horizontale Strebe
- 13: obere Ecke
- 14: untere Ecke
- 15: Längsstreben
- 16: Räder
- 17: Motor
- 18: Lager
- 19: Bremse
- 20: Steuereinrichtung
- 21: Dach
- 22: Seitenwandung
- 23: Sensoren
- 24: Manschette
- 25: Windmesseinrichtung
- 26: Ausströmvorrichtung für Gas
- 27: rohrartiges Gebilde
- 28: Ausströmöffnung
- 29: Zuführleitung
- 30: CO₂-Sensor
- 31: Leitung
- 32: Beleuchtungseinrichtung
- 33: Rasenheizung
- 34: Gelenke
- 35: Rasenmäh- Vertikutiereinrichtung
- 36: Pumpe
- 37: Ventil
- 38: erste Seilwinde
- 39: zweite Seilwinde
- 40: erstes Seil
- 41: zweites Seil
- 42: Gehäuseabschnitte
- 43: Balken
- 44: Beleuchtungsraum
- 45: Regenerationsraum
- 46: zweite Deckenwandung
- 47: Belüftungsöffnungen
- 48: Gehäuseprofilrahmen
- 49: Dachstrebenstruktur
- 50: Antriebswelle
- 51: Stellantrieb
- 52: Rolle

## Patentansprüche

1. Vorrichtung zur Wachstumsbeschleunigung und Regeneration von Rasenflächen, umfassend ein nach unten offenes, auf einer Rasenfläche (2) aufstellbares Gehäuse (3) an dem unterseitig Räder (16) angeordnet sind, wobei das Gehäuse einen Raum (6) über der Rasenfläche (2) begrenzt entweder transparent ausgebildet ist und/oder eine Beleuchtungseinrichtung (32) zum Beleuchten der Rasenfläche (2) aufweist, wobei eine CO₂-Ausströmvorrichtung (26) zum Einbringen von CO₂ in das Gehäuse vorgesehen ist,
**dadurch gekennzeichnet,**
**dass** eine Verfahreinrichtung vorgesehen ist, die einen Motor (17) zum Antreiben der Räder (16) aufweist, wobei die Verfahreinrichtung zum automatischen Bewegen des gesamten Gehäuses auf der Rasenfläche (2) zur abschnittsweisen Wachstumsbeschleunigung und Regeneration der Rasenfläche ausgebildet ist.

2. Vorrichtung gemäß Anspruch 1,
**dadurch gekennzeichnet,**
**dass** der Motor (17) als elektrischer Antrieb ausgebildet ist.

3. Vorrichtung nach Anspruch 2,
**dadurch gekennzeichnet,**
**dass** die Vorrichtung ein Satellitennavigationssystem aufweist, um Daten für eine Steuereinrichtung (20) bereitzustellen.

4. Vorrichtung nach einem der Ansprüche 1 bis 3,
**dadurch gekennzeichnet,**
**dass** am unteren Rand des Gehäuses nach unten weisende Manschetten (24) angeordnet sind.

5. Vorrichtung nach einem der Ansprüche 1 bis 4,
**dadurch gekennzeichnet,**
**dass** die Vorrichtung einen Rasenmäher und/oder einen Vertikutierer (35) aufweist.

6. Vorrichtung nach einem der Ansprüche 1 bis 5,
**dadurch gekennzeichnet,**
**dass** die Beleuchtungseinrichtung (32) in einer Höhe von 0,1 m bis 3 m über der Rasenfläche angeordnet ist.

7. Vorrichtung nach einem der Ansprüche 1 bis 6,
**dadurch gekennzeichnet,**
**dass** die CO₂-Ausströmvorrichtung (26) oberhalb der Beleuchtungseinrichtung (32), vorzugsweise am höchsten Punkt des Gehäuses (3), angeordnet ist.

8. Vorrichtung nach einem der Ansprüche 1 bis 7,
**dadurch gekennzeichnet,**
**dass** der umschlossene Raum (6) ein Zelt oder zeltartiges Gebilde aus einer im wesentlichen gasdichten Zeltwand ist, wobei die Zeltwandung vorzugsweise eine transparente Folie umfasst, und insbesondere isolierend ausgebildet ist mit einer Schaumstofffolienschicht und/oder einer zwischen zwei Folienwandungen angeordneten Luftkammer.

9. Vorrichtung nach einem der Ansprüche 1 bis 8,
**dadurch gekennzeichnet,**
**dass** die Ausströmvorrichtung (26) ein rohrartiges Gebilde (27) ist, welches sich über eine Teillänge oder die gesamte Länge des Raumes (6) erstreckt, wobei das Rohr (26) bzw. rohrartige Gebilde (27) Ausströmöffnungen (28) besitzt, aus denen ein CO₂-Gas ausströmen kann.

10. Vorrichtung nach einem der Ansprüche 1 bis 9,
**dadurch gekennzeichnet,**
**dass** zudem ein Gasspeicher zur Bevorratung von CO₂-Gas vorhanden ist, der mit einer entsprechenden Zuführleitung (29) mit dem rohrartigen Gebilde (27) verbunden ist, wobei in dem umschlossenen Raum (6) bzw. dem Zelt zur Überwachung des CO₂-Gehaltes ein CO₂-Messgerät oder ein CO₂-Sensor (30) vorhanden ist, welcher über eine Leitung (31) mit dem Gasspeicher oder einer separaten Einrichtung zum Steuern/Regeln des Gasgehaltes verbunden ist und die Vorrichtung zum Steuern/Regeln des Gasgehaltes die Entnahme von CO₂-Gas aus dem Gasspeicher regelnd ausgebildet ist.

11. Vorrichtung nach einem der Ansprüche 1 bis 10,
**dadurch gekennzeichnet,**
**dass** die Beleuchtungseinrichtung (32) aus Glühlampen und/oder Gasentladungslampen und/oder Metalldampflampen und/oder Leuchtstoffröhren besteht.

12. Vorrichtung nach einem der Ansprüche 1 bis 11,
**dadurch gekennzeichnet,**
**dass** der umbaute bzw. geschlossene Raum (6) eine Grundfläche von 5 m x 6 m bis 20 m x 40 m umfasst.

13. Verfahren zur Wachstumsbeschleunigung und Regeneration von Rasenflächen, unter Verwendung einer Vorrichtung nach einem der Ansprüche 1 bis 12, wobei die die gesamte Vorrichtung (1) mittels einer Verfahreinrichtung abschnittsweise zur Wachstumsbeschleunigung und Regeneration auf der Rasenfläche (2) aufgestellt und automatisch verfahren wird.

14. Verfahren nach Anspruch 13,
**dadurch gekennzeichnet,**
**dass** CO₂ im höchsten Bereich des Gehäuses (3) eingeleitet wird.

15. Verfahren nach einem der Ansprüche 13 oder 14,
**dadurch gekennzeichnet,**
**dass** das CO₂ im Gehäuse (3) durch Konvektion durch die Abwärme der Beleuchtungseinrichtung (32) oder einer Rasenheizung (33) oder einer Heizeinrichtung innerhalb des umbauten Raumes (6) verteilt wird.

## Claims

1. Apparatus for growth acceleration and regeneration of lawn areas, comprising a downwardly open housing (3) which can be placed on a lawn area (2) and which has wheels (16) arranged on the underside thereof, wherein the housing delimits a space (6) above the lawn area (2) and is either transparent and/or comprises an illumination means (32) for illuminating the lawn area (2), wherein a CO₂ outflow device (26) for introducing CO₂ into the housing is provided,
**characterized**
**in that** a movement means is provided which comprises a motor (17) for driving the wheels (16), wherein the movement means is designed for automatically moving the entire housing over the lawn area (2) for growth acceleration and regeneration of the lawn area in certain sections thereof.

2. Apparatus according to Claim 1,
**characterized**
**in that** the motor (17) is designed as an electric drive.

3. Apparatus according to Claim 2,
**characterized**
**in that** the apparatus comprises a satellite navigation system to provide data for a control means (20).

4. Apparatus according to one of Claims 1 to 3,
**characterized**
**in that** downwardly pointing collars (24) are arranged on the lower edge of the housing.

5. Apparatus according to one of Claims 1 to 4,
**characterized**
**in that** the apparatus comprises a lawnmower and/or a scarifier (35).

6. Apparatus according to one of Claims 1 to 5,
**characterized**
**in that** the illumination means (32) is arranged at a height of 0.1 m to 3 m above the lawn area.

7. Apparatus according to one of Claims 1 to 6,
**characterized**
**in that** the CO₂ outflow device (26) is arranged above the illumination means (32), preferably at the highest point of the housing (3).

8. Apparatus according to one of Claims 1 to 7,
**characterized**
**in that** the enclosed space (6) is a tent or a tent-like structure made up of a substantially gas-tight tent wall, wherein the tent wall preferably comprises a transparent sheet, and is particularly designed to be insulating with a foam sheet layer and/or an air chamber arranged between two sheet walls.

9. Apparatus according to one of Claims 1 to 8,
**characterized**
**in that** the outflow device (26) is a tubular structure (27) which extends over part of the length or the entire length of the space (6), wherein the tube (26) or tubular structure (27) has outflow openings (28) from which a CO₂ gas can flow out.

10. Apparatus according to one of Claims 1 to 9,
**characterized**
**in that** there is additionally present a gas accumulator for storing CO₂ gas, which gas accumulator is connected to the tubular structure (27) by a corresponding feedline (29), wherein a CO₂ measuring device or a CO₂ sensor (30) is present in the enclosed space (6) or the tent to monitor the CO₂ content and is connected via a line (31) to the gas accumulator or a separate means for controlling/regulating the gas content, and the device for controlling/regulating the gas content is designed so as to regulate the removal of CO₂ gas from the gas accumulator.

11. Apparatus according to one of Claims 1 to 10,
**characterized**
**in that** the illumination means (32) consists of incandescent lamps and/or gas discharge lamps and/or metal vapour lamps and/or fluorescent tubes.

12. Apparatus according to one of Claims 1 to 11,
**characterized**
**in that** the enclosed or closed space (6) comprises a base area of from 5 m x 6 m to 20 m x 40 m.

13. Method for growth acceleration and regeneration of lawn areas, using an apparatus according to one of Claims 1 to 12, wherein the entire apparatus (1) is placed on and automatically moved over the lawn area (2) in certain sections thereof by way of a movement means for the purpose of growth acceleration and regeneration.

14. Method according to Claim 13,
**characterized**
**in that** CO₂ is introduced in the highest region of the housing (3).

15. Method according to either of Claims 13 and 14,
**characterized**
**in that** the CO₂ in the housing (3) is distributed within the enclosed space (6) by convection through the waste heat of the illumination means (32) or a lawn heater (33) or a heating device.

## Revendications

1. Dispositif d'accélération de la croissance et de régénération de pelouses, comprenant un boîtier (3) ouvert vers le dessous qui peut être installé sur une pelouse (2) et sur le côté inférieur duquel sont disposées des roues (16), le boîtier délimitant un espace (6) au-dessus de la pelouse (2) et étant soit configuré transparent, et/ou possédant un appareil d'éclairage (32) destiné à éclairer la pelouse (2), un dispositif de diffusion de CO₂ (26) servant à apporter du CO₂ dans le boîtier étant présent,
**caractérisé en ce que**
il existe un appareil de déplacement qui possède un moteur (17) servant à entraîner les roues (16) l'appareil de déplacement étant configuré pour déplacer automatiquement le boîtier complet sur la pelouse (2) en vue de l'accélération de la croissance et de la régénération par portions de la pelouse.

2. Dispositif selon la revendication 1, **caractérisé en ce que** le moteur (17) est réalisé sous la forme d'un mécanisme d'entraînement électrique.

3. Dispositif selon la revendication 2, **caractérisé en ce que** le dispositif possède un système de navigation par satellite afin de délivrer des données pour un appareil de commande (20).

4. Dispositif selon l'une des revendications 1 à 3, **caractérisé en ce que** des manchettes (24) orientées vers le bas sont disposées sur le bord inférieur du boîtier.

5. Dispositif selon l'une des revendications 1 à 4, **caractérisé en ce que** le dispositif possède une tondeuse à gazon et/ou un scarificateur (35).

6. Dispositif selon l'une des revendications 1 à 5, **caractérisé en ce que** l'appareil d'éclairage (32) est disposé à une hauteur de 0,1 m à 3 m au-dessus de la pelouse.

7. Dispositif selon l'une des revendications 1 à 6, **caractérisé en ce que** le dispositif de diffusion de CO₂ (26) est disposé au-dessus de l'appareil d'éclairage (32), de préférence au point le plus haut du boîtier (3).

8. Dispositif selon l'une des revendications 1 à 7, **caractérisé en ce que** l'espace entouré (6) est une tente ou une structure de type tente constituée, d'une paroi de tente sensiblement hermétique aux gaz, la paroi de tente comprenant de préférence un film transparent et étant notamment configurée isolante avec une couche de film en mousse et/ou une chambre à air disposée entre deux parois en film.

9. Dispositif selon l'une des revendications 1 à 8, **caractérisé en ce que** le dispositif de diffusion (26) est une structure rotative (27) qui s'étend sur une longueur partielle ou sur toute la longueur de l'espace (6), le tube (26) ou la structure de type tube (27) possédant des ouvertures de diffusion (28) depuis lesquelles peut être diffusé du gaz CO₂.

10. Dispositif selon l'une des revendications 1 à 9, **caractérisé en ce qu'**il existe en plus un accumulateur de gaz destiné à tenir en réserve du gaz CO₂, lequel est relié à la structure de type tube (27) par une conduite d'arrivée (29) correspondante, un appareil de mesure de CO₂ ou un capteur de CO₂ (30) étant présent dans l'espace (6) entouré ou dans la tente en vue de surveiller la teneur en CO₂, lequel est relié par le biais d'une conduite (31) à l'accumulateur de gaz ou à un système séparé de commande/régulation de la teneur en gaz et le dispositif de commande/régulation de la teneur en gaz étant conçu pour réguler le prélèvement de gaz CO₂ de l'accumulateur de gaz.

11. Dispositif selon l'une des revendications 1 à 10, **caractérisé en ce que** le dispositif d'éclairage (32) se compose d'ampoules à incandescence et/ou de lampes à décharge gazeuse et/ou de lampes à vapeurs métalliques et/ou de tubes fluorescents.

12. Dispositif selon l'une des revendications 1 à 11, **caractérisé en ce que** l'espace (6) clos ou fermé comprend une surface au sol de 5 m x 6 m à 20 m x 40 m.

13. Procédé d'accélération de la croissance et de régénération de pelouses, en utilisant un dispositif selon l'une des revendications 1 à 12, l'ensemble di dispositif (1) étant installé et déplacé automatiquement sur la pelouse (2) par portions en vue de l'accélération de la croissance et de la régénération.

14. Procédé selon la revendication 13, **caractérisé en ce que** le CO₂ est apporté dans la zone la plus haute du boîtier (3).

15. Procédé selon l'une des revendications 13 ou 14, **caractérisé en ce que** le CO₂ dans le boîtier (3) est distribué par convection par la chaleur perdue du dispositif d'éclairage (32) ou d'un chauffage de gazon (33) ou d'un appareil de chauffage à l'intérieur de l'espace (6) clos.
